# EUROPÄISCHE PATENTSCHRIFT

(11) **EP 4 227 005 B1**
(45) Veröffentlichungstag und Bekanntmachung des Hinweises auf die Patenterteilung: **31.07.2024**
(21) Anmeldenummer: 23152225.1
(22) Anmeldetag: 18.01.2023
(51) Int. Cl.: B02C 13/09, B02C 13/31, B02C 23/04, B02C 1/02

(54) **ÜBERLASTSICHERUNG FÜR DAS HYDRAULISCHE SYSTEM EINER MINERALMATERIAL-BEARBEITUNGSANLAGE**
OVERLOAD PROTECTION FOR THE HYDRAULIC SYSTEM OF A MINERAL MATERIAL PROCESSING PLANT
DISPOSITIF DE SÉCURITÉ CONTRE LES SURCHARGES POUR LE SYSTÈME HYDRAULIQUE D'UNE INSTALLATION DE TRAITEMENT DE MATIÈRES MINÉRALES

(30) Priorität: 01.02.2022 DE 102022102283
(43) Veröffentlichungstag der Anmeldung: 16.08.2023
(73) Patentinhaber: KLEEMANN GMBH, 73037 Göppingen (DE)
(72) Erfinder: HÄBERLE, Steffen, 89542 Herbrechtingen (DE); MEYER, Gerd, 73340 Amstetten (DE)
(74) Vertreter: Herrmann, Jochen

(56) Entgegenhaltungen:
- EP-A1- 2 042 238
- US-A1- 2021 370 308

## Beschreibung

Die Erfindung betrifft eine Überlastsicherung für das hydraulische System einer Mineralmaterial-Bearbeitungsanlage, insbesondere für einen Rotationsprallbrecher, einen Backenbrecher oder dgl., wobei ein Hydraulikelement, welches dazu hergerichtet ist Hydraulikflüssigkeit zu bevorraten und/oder zu leiten, vorgesehen ist, wobei das Hydraulikelement einen Anschlussbereich aufweist, der eine Durchtrittsöffnung für Hydraulikfluid des Hydrauliksystems aufweist, wobei die Durchtrittsöffnung mittels einer auswechselbaren Berstplatte überdeckt ist, wobei ein Berstplatten-Halter auf der dem Anschlussbereich abgewandten Rückseite der Berstplatte angeordnet ist, und wobei zumindest eine Befestigungsschraube durch eine Schraubaufnahme des Berstplatten-Halters und eine dazu fluchtend angeordnete Bohrung der Berstplatte hindurchgeführt und in eine Gewindeaufnahme des Anschlussbereichs eingeschraubt ist, derart, dass die Berstplatte zwischen einer Druckfläche des Berstplatten-Halters und einer Anschlussfläche des Anschlussbereichs im Montagezustand geklemmt gehalten ist. Dokument US2021/0370308 A1 betrifft einen Brecher mit einem Brechaggregat und mit einer Überlast-Auslöseeinrichtung, die einen Hydraulikzylinder aufweist.

Aus DE 10 2010 015 583 B4 ist eine Mineralmaterial-Bearbeitungsanlage, nämlich ein Rotationsprallbrecher bekannt. Dieser Rotationsprallbrecher hat ein Brechaggregat mit einem Brechrotor. Radial außen besitzt der Brechrotor eine Vielzahl von Schlagleisten, die einen Schlagkreis festlegen. Dem Brechrotor steht zumindest ein Wandelement in Form einer Prallschwinge gegenüber. Zwischen der Prallschwinge und dem Schlagkreis ergibt sich ein Brechspalt.

Während des Betriebseinsatzes wird das zu brechende Material in das Brechaggregat eingefüllt. Dort wird es mittels der Schlagleisten radial nach außen geschleudert. Das Material trifft dann auf die Prallschwinge, wodurch es zerkleinert wird. Sobald das Material eine Korngröße aufweist, die kleiner ist als der Brechspalt, fällt es durch den Brechspalt hindurch und gelangt aus dem Bereich des Brechaggregats. Unterhalb des Brechaggregats ist ein Brecherabzugsband angeordnet. Mit diesem kann das gebrochene Material abtransportiert werden.

Bei Prallbrechern ist die Prallschwinge üblicherweise gegenüber dem Chassis der Brechanlage mit einem Hydraulikzylinder abgestützt. Mit dem Hydraulikzylinder kann die Größe des Brechspalts auf das erforderliche Maß eingestellt und aufrechterhalten werden.

Für den Fall, dass nicht brechbares Material in den Brechraum des Brechaggregats gelangt, welches durch den eingestellten Brechspalt nicht entweichen kann, ist eine Überlastsicherung vorgesehen.

Die Überlastsicherung kann eine sogenannte Berstplatte aufweisen. Die Berstplatte dichtet eine Durchtrittsöffnung des Hydraulikzylinders ab. Wirkt eine zu große Kraft auf die Prallschwinge (wie im Fall von nicht brechbarem Material im Brechraum) und damit auch auf den diese abstützenden Hydraulikzylinder. Daraus resultiert ein zu hoher und für das System schädlicher Druck. Um das Hydrauliksystem zu schützen und um Schäden abzuwenden bricht dann die Berstplatte. Dann kann das Hydrauliköl durch die Durchtrittsöffnung aus dem Hydraulikzylinder entweichen und der Hydraulikzylinder einfahren. Dementsprechend kann die Prallschwinge ausweichen und der Brechspalt öffnet sich. Das nicht brechbare Material kann dann durch den so geöffneten Brechspalt entweichen.

Die Berstplatte ist zwischen dem Gehäuse des Hydraulikzylinders und einem Berstplatten-Halter eingespannt. Üblicherweise werden dabei Schrauben verwendet, die durch Bohrungen des Berstplatten-Halters und der Berstplatte hindurchgeführt und in den Hydraulikzylinder eingeschraubt werden.

Nach einem Überlastereignis muss die Berstplatte ausgetauscht werden. Hierzu müssen die Befestigungsschrauben gelöst und der Berstplatten-Halter demontiert werden. Das Lösen des Berstplatten-Halters muss sorgfältig vorgenommen werden, da sonst Hydrauliköl auslaufen kann. Weiterhin ist es so, dass im beengten Bauraum der Bearbeitungsanlage das Ausrichten und Befestigen des Berstplatten-Halters an dem Hydraulikzylinder nicht immer einfach möglich ist.

Es ist daher Aufgabe der Erfindung, eine Überlastsicherung der eingangs erwähnten Art bereitzustellen, die nach einem Überlastfall eine einfache Wartung ermöglicht.

Diese Aufgabe wird dadurch gelöst, dass wenigstens ein Halteelement vorgesehen ist, das in einer Demontageposition den Berstplatten-Halter an dem Hydraulikelement, insbesondere an dem Anschlussbereich hält, wenn die zumindest eine Befestigungsschraube aus der Gewindeaufnahme des Anschlussbereichs herausgeschraubt und die Berstplatte entfernt ist.

Wenn nach einem Überlastfall die Überlastsicherung ausgelöst hat, so muss die Berstplatte ausgetauscht werden. Dies gelingt nach der Erfindung einfach dadurch, dass die Befestigungsschrauben entfernt und die Verbindung der Berstplatte im Klemmbereich zwischen dem Berstplatten-Halter und dem Anschlussbereich gelöst wird. Dann kann die Berstplatte entfernt werden. In dieser Demontageposition hält das Halteelement den Berstplatten-Halter an dem Anschlussbereich. Hierbei wird dann vermieden, dass Hydrauliköl, welches sich in dem Berstplatten-Halter befindet, auslaufen kann. Anstelle der beschädigten Berstplatte kann dann eine neue Berstplatte eingesetzt werden. Anschließend kann der Berstplatten-Halter wieder befestigt werden. Da der Berstplatten-Halter mit dem Halteelement in Position gehalten ist, ist dies einfach möglich. Der Monteur muss nun lediglich wieder die Befestigungsschrauben einsetzen und in die Gewindeaufnahmen des Anschlussbereichs einschrauben. Anschließend ist die Überlastsicherung wieder zum erneuten Gebrauch verwendbar.

Vorzugsweise ist es so, dass das Halteelement den Berstplatten-Halter dann, wenn die Befestigungsschrauben entfernt sind, hinsichtlich seiner Bewegungsmöglichkeiten so eingeschränkt ist, dass er sich nur noch mit einem Freiheitsgrad oder mit zwei Freiheitsgraden bewegen lässt. Beispielsweise ist das Halteelement so gestaltet, dass der Berstplatten-Halter gegenüber dem Anschlussbereich nur noch verdrehbar ist (ein Freiheitsgrad) oder dass er nur noch gegenüber dem Halteelement verdrehbar und quer zur Plattenebene der Berstplatte versetzbar ist.

Gemäß einer bevorzugten Erfindungsvariante ist es vorgesehen, dass die Berstplatte eine oder mehrere Ausnehmung aufweist, die einen seitlichen Einführabschnitt aufweist, wobei der Einführabschnitt die Ausnehmung zu einer quer zur Plattenebene der Berstplatte verlaufenden Seite hin öffnet, derart, dass das Halteelement quer zur Plattenebene des Berstelements seitlich in die Ausnehmung einschiebbar und aus dieser herausnehmbar ist. Wenn die Befestigungsschrauben entfernt sind, kann die Berstplatte aus dem Bereich zwischen dem Berstplatten-Halter und dem Aufnahmebereich herausgezogen werden. Das Halteelement verbleibt in seiner Position. Wenn dann die neue Berstplatte eingesetzt wird, so kann sie einfach zunächst auf das Halteelement aufgeschoben werden. Das Halteelement fährt durch den Einführabschnitt in die Ausnehmung ein. Entsprechend gelingt die Positionierung der Berstplatte auch bei unübersichtlichen Montageverhältnissen zuverlässig und eindeutig. Weiterhin wird hierdurch auch eine platzsparende Bauweise bewirkt.

Eine besonders einfache Konstruktion ergibt sich dann, wenn vorgesehen ist, dass das Halteelement von einer Schraube gebildet ist.

Vorzugsweise kann es dabei auch vorgesehen sein, dass diese Schraube mit einem Bolzenabschnitt in die Ausnehmung eingreift, und dass das Halteelement durch eine Schraubaufnahme des Berstplatten-Halters und die Ausnehmung hindurchgeführt und in eine in die Anschlussfläche des Anschlussbereichs eingebrachte Gewindeaufnahme eingeschraubt ist. Vorzugsweise ist es hierbei möglich, das Halteelement zusätzlich zu den Befestigungsschrauben zur Verspannung des Berstplatten-Halters zu verwenden.

Wenn vorgesehen ist, dass die Berstplatte mit ihrer ebenen Vorderseite auf der Anschlussfläche des Anschlussbereichs und einer gegenüberliegenden ebenen Rückseite auf der Druckfläche des Berstplatten-Halters anliegt und zwischen der Anschlussfläche und der Druckfläche geklemmt gehalten ist, dann ist es bereits ausreichend, wenn nach der gelösten Klemmverbindung (und entfernten Befestigungsschrauben) sich die Beabstandung des Berstplatten-Halters von dem Aufnahmebereich geringfügig vergrößert. Die Demontage der Berstplatte ist dann einfach möglich, da sie blockadefrei seitlich aus ihrer Montagestellung herausgezogen werden kann. Umgekehrt kann die neue Berstplatte dann leicht in den Spaltbereich zwischen Berstplatten-Halter und Aufnahmebereich eingeschoben werden. Die Gefahr eines Ölverlusts wird hierdurch weiter verringert.

Eine besonders vorteilhafte Ausgestaltung ergibt sich dann, wenn vorgesehen ist, dass das Halteelement mit einem Abschnitt der Berstplatte, insbesondere mit der Ausnehmung, ein Schwenklager bildet, dessen Schwenkachse quer zu der Anschlussfläche steht, derart dass die Berstplatte dann, wenn die Befestigungsschrauben entfernt sind, quer zur Anschlussfläche aus ihrer Montageposition herausschwenkbar ist. Dies erhöht die Montagefreundlichkeit. Insbesondere kann die neue Berstplatte an dem Schwenklager vorpositioniert und dann leicht in die eingeschwenkte Montageposition gebracht werden.

Erfindungsgemäß kann es vorgesehen sein, dass die Berstplatte ein Berststück mit einer Sollbruchstelle aufweist, die vorzugsweise in Form einer Querschnittsschwächung ausgebildet ist. Dabei kann es insbesondere so sein, dass das Berststück über die Sollbruchstelle so an die Berstplatte angebunden ist, dass sie im Überlastfall vollständig abgesprengt wird. Vorzugsweise kann es auch so sein, dass das Berststück im Überlastfall über einen Materialabschnitt an die Berstplatte einstückig angebunden bleibt.

Wenn vorgesehen ist, dass der Berstplatten-Halter eine Durchführung aufweist, die im montierten Zustand des Berstplatten-Halters von der Berstplatte überdeckt ist, dass sich an die Durchführung ein Kanalabschnitt des Berstplatten-Halters anschließt und dass der Kanalabschnitt zu einem Leitungsanschluss führt, an den eine Hydraulikleitung an den Berstplatten-Halter anschließbar oder angeschlossen ist, dann ist garantiert, dass die Berstplatte zuverlässig in Richtung auf die Durchführung auslösen kann. Hierzu stellt die Durchführung einen Bereich bereit, in den die Berstplatte hinein deformiert werden kann. Zudem kann das austretende Hydrauliköl in dem Kanalabschnitt des Berstplatten-Halters gesammelt und dann über den Leitungsanschluss in ein abführendes Leitungssystem geordnet abgeleitet bzw. in einen Sammelbehälter geleitet werden.

Eine im Rahmen dieser vorliegenden Erfindung bevorzugte Überlastsicherung ist derart, dass das Hydraulikelement ein Hydraulikzylinder ist, der ein Zylindergehäuse aufweist, in dem ein Kolben verstellbar geführt ist, wobei an den Kolben eine Kolbenstange angeschlossen ist, die mit ihrem Kolbenstangenkopf aus dem Hydraulikzylinder herausgeführt ist, wobei der Kolben eine Druckkammer begrenzt, und wobei die Druckkammer in räumlicher Verbindung mit der Durchtrittsöffnung des Anschlussbereichs steht. Vorzugsweise steht dabei die Berstplatte so, dass sich die Berstplatten-Ebene in der Montageposition quer, insbesondere senkrecht zur Bewegungsrichtung des Kolbens erstreckt. Dies erleichtert die Zugänglichkeit zu der Überlastsicherung und damit die Montage bzw. Demontage der Berstplatte.

Hierbei kann es auch vorzugsweise vorgesehen sein, dass der Hydraulikzylinder, vorzugsweise mit seiner Kolbenstange, an ein Wandelement eines Brechaggregats, mittels eines Schwenklagers angekoppelt ist, und wobei das Wandelement mittels eines Lagers schwenkbar an einem Chassis gehalten ist, wobei vorzugsweise vorgesehen ist, dass das Wandelement eine Prallschwinge eines Rotationsprallbrechers ist.

Die Aufgabe der Erfindung wird auch gelöst mit einem Verfahren zur Reparatur einer Überlastsicherung einer Mineralmaterial-Bearbeitungsanlage, wobei die Überlastsicherung gemäß einem der Ansprüche 1 bis 9 ausgestaltet ist, wobei die Befestigungsschrauben gelöst und entfernt werden, und dabei der Berstplatten-Halter mittels des Halteelements mit dem Anschlussbereich verbunden bleibt, wobei dann die Berstplatte der Überlastsicherung entnommen und eine neue Berstplatte in die Überlastsicherung eingesetzt wird, und dass dann die Befestigungsschrauben wieder in die Schraubaufnahmen des Berstplatten-Halters und die Bohrungen der neuen Berstplatte eingesetzt und in die Gewindeaufnahmen des Anschlussbereichs eingeschraubt werden.

Die Erfindung wird im Folgenden anhand eines in den Zeichnungen dargestellten Ausführungsbeispiels näher erläutert. Es zeigen:
- Figur 1: in schematischer Seitenansicht eine Brechanlage,
- Figur 2: ein Brechaggregat der Brechanlage gemäß Figur 1,
- Figur 3: einen Hydraulikzylinder mit einer Überlastsicherung,
- Figur 4: die Darstellung gemäß Figur 3 in einer veränderten Perspektive,
- Figur 5: in Aufsicht eine Berstplatte der Überlastsicherung gemäß den Figuren 3 und 4 und
- Figur 6: eine schematische Darstellung eines Teils des Hydraulikkreises der Brechanlage.

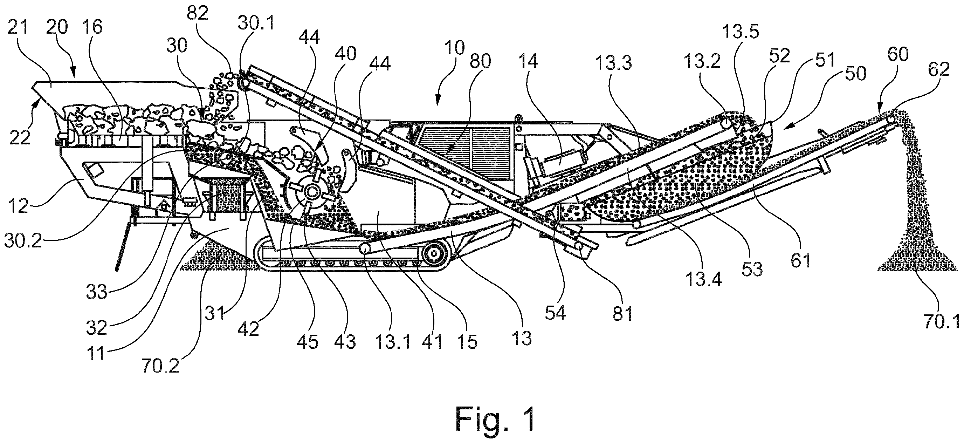

Figur 1 zeigt eine Aufbereitungsanlage in Form einer Brechanlage 10. Die Brechanlage 10 ist als mobile Brechanlage ausgebildet und weist daher Fahrwerke 15 auf. Denkbar ist es jedoch auch, dass es sich bei der Brechanlage 10 um eine stationäre Brechanlage handelt.

Die Brechanlage 10 weist ein Chassis 11 auf, welches die Maschinenkomponenten oder zumindest einen Teil der Maschinenkomponenten trägt. An seinem rückwärtigen Ende besitzt das Chassis 11 einen Ausleger 12. Im Bereich des Auslegers 12 ist ein Material-Zuführbereich gebildet.

Der Material-Zuführbereich umfasst einen Aufgabetrichter 20 und eine Materialzuführeinrichtung 16.

Der Aufgabetrichter 20 kann zumindest teilweise von Trichterwänden 21, die in Richtung der Längserstreckung der Brechanlage 10 verlaufen, und einer quer zur Längserstreckung verlaufenden Rückwand 22 gebildet sein. Der Aufgabetrichter 20 führt zu der Materialzuführeinrichtung 16.

Die Materialzuführeinrichtung 16 kann, wie im vorliegenden Ausführungsbeispiel dargestellt, eine Förderrinne aufweisen, die mittels eines Vibrationsantriebs antreibbar ist. Über den Aufgabetrichter 20 kann, beispielsweise mittels eines Radladers, zu zerkleinerndes Gut in die Brechanlage 10 eingefüllt und auf die Förderrinne aufgegeben werden.

Von der Förderrinne gelangt das zu zerkleinernde Gut in den Bereich einer Siebeinheit 30. Diese Siebeinheit 30 kann auch als Vorsieb-Anordnung bezeichnet werden. Im Bereich der Siebeinheit 30 ist wenigstens ein Siebdeck 30.1, 30.2 angeordnet. Im vorliegenden Ausführungsbeispiel sind zwei Siebdecks 30.1, 30. 2 verwendet.

An dem oberen Siebdeck 30.1 wird von dem zu zerkleinernden Material eine Teilfraktion ausgesiebt. Diese Teilfraktion hat bereits eine ausreichende Korngröße, die nicht mehr in der Brechanlage 10 zerkleinert werden muss. Insofern kann diese ausgesiebte Teilfraktion in einem Bypasskanal 31 vorbei an einem Brechaggregat 40 geleitet werden.

Wenn ein zweites Siebdeck 30.2 in der Siebeinheit 30 verwendet ist, so kann aus der Teilfraktion, die unterhalb des Siebdecks 30.1 anfällt, eine weitere Feinpartikel-Fraktion ausgesiebt werden. Diese Feinpartikel-Fraktion wird unterhalb des Siebdecks 30.2 zu einem Seitenaustragband 32 geführt. Von dem Seitenaustragband 32 wird die Feinpartikel-Fraktion abgeleitet und auf eine seitlich der Maschine angeordnete Halde 70.2 gefördert.

Wie Figur 1 veranschaulicht, kann es sich bei der Siebeinheit 30 um ein Vibrationssieb mit einem Siebantrieb 33 handeln. Der Siebantrieb 33 versetzt das Siebdeck 30.1 und/oder dass Siebdeck 30.2 in Vibrationsbewegungen. Aufgrund der geneigten Anordnung der Siebdecks 30.1, 30.2 und in Verbindung mit den Vibrationsbewegungen wird ein Materialtransport auf den Siebdecks 30.1, 30.2 hin in Richtung zu dem Brechaggregat 40 bzw. zu dem Bypasskanal 31 bewirkt.

Das von dem Siebdeck 30.1 kommende zu zerkleinernde Material wird dem Brechaggregat 40 zugeleitet, wie dies Figur 1 erkennen lässt.

Das Brechaggregat 40 kann beispielsweise in Form eines Rotationsprall-Brechaggregats ausgebildet sein. Es kann jedoch auch ein anderes Brechaggregat, beispielsweise ein Backen-Brechaggregat eines Backenbrechers, sein.

Das Brechaggregat 40 weist einen Brechrotor 42 auf, der von einem Motor 41 angetrieben wird. In Figur 1 verläuft die Rotationsachse des Brechrotors 42 horizontal in Richtung der Bildtiefe.

Der Brechrotor 42 kann beispielsweise an seinem Außenumfang mit Schlagleisten 43 bestückt sein. Gegenüberliegend dem Brechrotor 42 können beispielsweise Wandelemente, vorzugsweise in Form von Prallschwingen 44 angeordnet sein.

Bei drehendem Brechrotor 42 wird das zu zerkleinernde Material mittels der Schlagleisten 43 nach außen geschleudert. Dabei trifft dieses Material auf die Prallschwingen 44 und wird aufgrund der hohen kinetischen Energie zerkleinert. Wenn das zu zerkleinernde Material eine ausreichende Korngröße aufweist, die es ermöglicht, dass die Materialteilchen durch den Spalt zwischen den Prallschwingen 44 und den radial äußeren Enden der Schlagleisten 43 hindurchgeführt werden können, so verlässt das zerkleinerte Gut das Brechaggregat 40 über den Brecherauslass 45.

Denkbar ist es, dass im Bereich des Brecherauslasses 45 das vom Brechaggregat 40 kommende und zerkleinerte Material mit dem aus dem Bypasskanal 31 kommenden Material zusammengeführt und auf einen Bandförderer 13 gebracht wird. Mit dem Bandförderer 13 kann das Material aus dem Arbeitsbereich des Brechaggregats 40 herausgeführt werden.

Wie die Zeichnungen zeigen, kann der Bandförderer 13 ein endlos umlaufendes Förderband aufweisen, das einen Lasttrum 13.3 und einen Leertrum 13.4 aufweist. Der Lasttrum 13.3 dient dazu das gebrochene Material, welches aus dem Brecherauslass 45 des Brechaggregats 40 fällt, aufzufangen und abzutransportieren. An den Bandenden kann das Förderband zwischen dem Lasttrum 13.3 und dem Leertrum 13.4 mittels Umlenkrollen 13.1, 13.2 umgelenkt werden. Im Bereich zwischen den Umlenkrollen 13.1, 13.2 können Führungen, insbesondere Tragrollen vorgesehen sein, um die Förderrichtung des Förderbands zu verändern, dem Förderband eine bestimmte Form zu geben und/oder das Förderband zu stützen.

Der Bandförderer 13 weist einen Bandantrieb auf, mittels dem der Bandförderer 13 angetrieben werden kann. Der Bandantrieb kann vorzugsweise am Abwurfende 13.5 oder im Bereich des Abwurfendes 13.5 des Bandförderers 13 angeordnet sein.

Der Bandförderer 13 kann, beispielsweise mittels des Bandantriebs, an eine Steuereinrichtung mittels einer Steuerleitung angeschlossen sein.

Es können ein oder mehrere weitere Bandförderer 60 und/oder ein Rückführförderer 80 verwendet sein, die prinzipiell die gleiche Bauweise aufweisen wie der Bandförderer 13. Insofern kann auf die vorstehenden Ausführungen Bezug genommen werden.

Im Bereich zwischen dem Aufgabeende und dem Abwurfende 13.5 kann ein Magnet 14 oberhalb des Lasttrums 13.3 angeordnet sein. Mit dem Magnet 14 lassen sich Eisenteile aus dem gebrochenen Gut abheben und aus dem Förderbereich des Bandförderers 13 heraus bewegen.

In Transportrichtung nach dem Bandförderer 13 kann eine Nachsiebvorrichtung 50 angeordnet sein. Die Nachsiebvorrichtung 50 weist ein Siebgehäuse 51 auf, in dem wenigstens ein Siebdeck 52 untergebracht ist. Unterhalb des Siebdecks 52 ist ein Gehäuseunterteil 53 gebildet, welcher als Sammelraum dient für das am Siebdeck 52 ausgesiebte Material.

Das Gehäuseunterteil schafft über eine Öffnung eine räumliche Verbindung zu einem weiteren Bandförderer 60. Hier bildet der weitere Bandförderer 60 seinen Aufgabebereich 61, wobei das ausgesiebte Material im Aufgabebereich 61 auf den Lasttrum des weiteren Bandförderers 60 geleitet wird. Der weitere Bandförderer 60 fördert das ausgesiebte Material hin zu seinem Abwurfende 62. Von dort gelangt das ausgesiebte Material auf eine Halde 70.1.

Das am Siebdeck 52 der Nachsiebvorrichtung 50 nicht ausgesiebte Material wird vom Siebdeck 52 auf ein Stichband 54 gefördert. Das Stichband 54 kann ebenfalls als ein Bandförderer ausgebildet sein, sodass auf die oben in Bezug auf den Bandförderer 13 gemachten Ausführungen verwiesen werden kann. Die Transportrichtung des Stichbands 54 verläuft in Figur 1 in Richtung der Bildtiefe.

An seinem Abwurfende übergibt das Stichband 54 das nicht ausgesiebte Material, das auch als Überkorn bezeichnet wird, auf den Aufgabebereich 81 des Rückführförderers 80. Der Rückführförderer 80, der als Bandförderer ausgebildet sein kann, fördert das Überkorn in Richtung hin zum Aufgabetrichter 20. An seinem Abwurfende 82 übergibt der Rückführförderer 80 das Überkorn in den Materialfluss und zwar vorzugsweise in den Material-Zuführbereich. Das Überkorn kann mithin dem Brechaggregat 40 erneut zugeführt und hier auf die gewünschte Partikelgröße gebrochen werden.

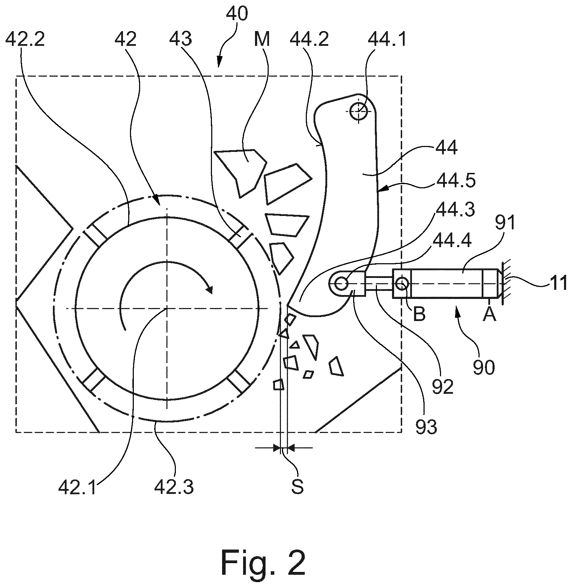

In Figur 2 ist das Brechaggregat 40 des Prallbrechers schematisch detaillierter dargestellt. Der Brechrotor 42 ist in einem Gehäuse des Brechaggregats 40 um eine Rotationsachse 42.1 drehbar gelagert. Zum Antrieb des Brechrotors 42 kann der oben erwähnte Motor 41 verwendet werden.

Auf der Rotorperipherie 42.2 sind Schlagleisten 43 montiert. Bei einer Drehung des Brechrotors 42 wird durch die sich ebenfalls drehenden Schlagleisten 43 ein Schlagkreis 42.3 gebildet. Diesem Schlagkreis 42.3 zugeordnet ist gegenüberliegend und in Bewegungsrichtung des Brechguts eine Prallschwinge 44 schwenkbeweglich gelagert. Hierzu wird ein Schwenklager 44.1 verwendet. Die Prallschwinge 44 ist mittels dieses Schwenklagers 44.1 an dem Chassis 11 gelagert.

Die Prallschwinge 44 weist an ihrer dem Innenraum des Brechaggregats 40 zugewandten Seite ein Wandelement 44.2 auf. Im distalen Endbereich 44.3 steht das Wandelement 44.2 dem Brechrotor 42 derart gegenüber, dass im Bereich zwischen dem Schlagkreis 42.3 und dem distalen Endbereich 44.3 ein Brechspalt S gebildet wird. Unterhalb des Brechaggregats 40 wird der oben beschriebene Brecherauslass 45 gebildet.

Während des Betriebseinsatzes wird das zu zerkleinernde Material M, welches in Figur 2 schematisch dargestellt ist, in das Brechaggregat 40 eingefüllt. Dieses Material M wird mittels der sich drehenden Schlagleisten 43 nach außen geschleudert. Es trifft dann auf das Wandelement 44.2 der Prallschwinge 44 und wird sowohl an der Schlagleiste 43 und an der Prallschwinge 44 zerkleinert. Wenn das zerkleinerte Material M eine Korngröße aufweist, die kleiner ist als die Weite des Brechspalts S, so fällt es nach unten und verlässt das Brechaggregat 40 über den Brecherauslass 45. Weist das Material M dann jedoch eine noch nicht ausreichend kleine Korngröße auf, so wird es so lange wiederholt gegen die Prallschwinge 44 geworfen, bis ein ausreichender Zerkleinerungszustand erreicht ist.

Im Bereich der Rückseite 44.5 der Prallschwinge 44 ist ein Hydraulikzylinder 90 angeordnet. Der Hydraulikzylinder 90 dient dazu, die Prallschwinge 44 so abzustützen, dass die Weite des Brechspalts S während des Brechvorgangs aufrechterhalten wird. Weiterhin bietet der Hydraulikzylinder 90 die Möglichkeit die Weite des Brechspalts S zu verändern, wenn dies von dem Maschinenbediener gewünscht wird und wie dies in der DE 10 2010 015 583 B4 beispielhaft beschrieben ist.

Der Hydraulikzylinder 90 besitzt ein Zylindergehäuse 91. In diesem ist ein Kolben verstellbar aufgenommen. An den Kolben ist eine Kolbenstange 92 angeschlossen. Ein Kolbenstangenkopf 93, welcher von der Kolbenstange 92 getragen ist, dient zur Ankopplung an die Prallschwinge 44. Dabei ist es so, dass der Kolbenstangenkopf 93 mittels eines Lagers 44.4 schwenkbar an die Prallschwinge 44 angekoppelt ist.

In Figur 2 ist veranschaulicht, dass der Hydraulikzylinder 90 Hydraulikanschlüsse A, B aufweist. Über diese Hydraulikanschlüsse A, B kann der Hydraulikzylinder 90 mit Hydrauliköl versorgt werden.

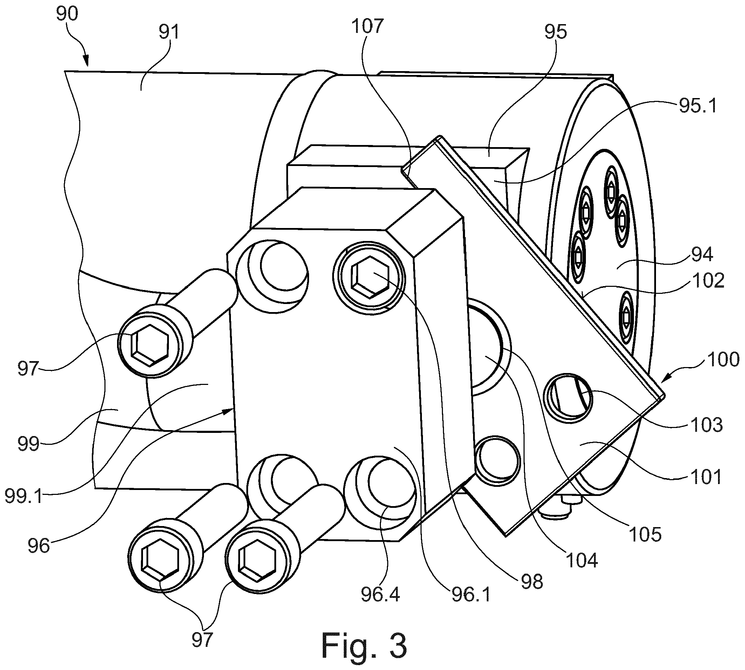

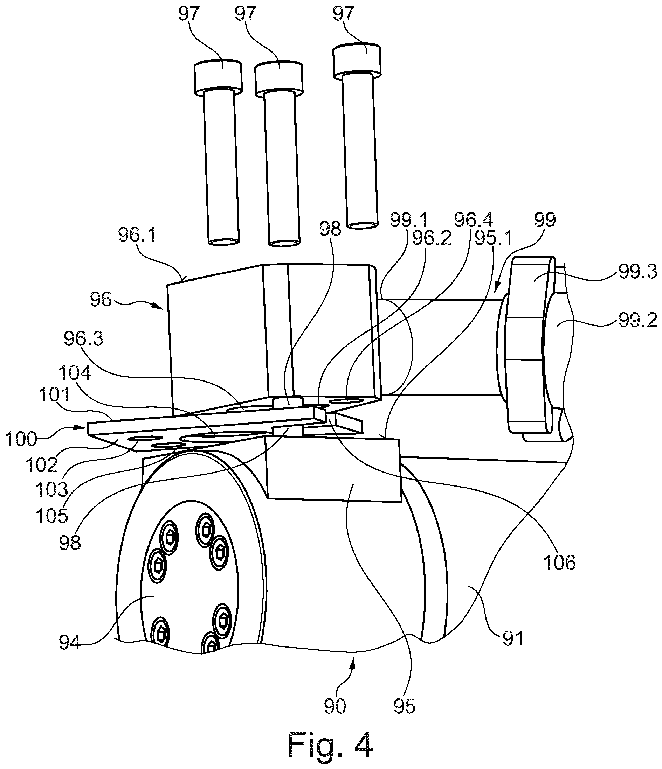

Gemäß der Erfindung weist der Hydraulikzylinder 90 eine Überlastsicherung auf. Dies wird im Folgenden unter Bezugnahme auf die Figuren 3 und 4 näher detailliert.

In diesen Darstellungen ist der der Prallschwinge 44 abgewandte rückwärtige Bereich des Hydraulikzylinders 90 vergrößert dargestellt.

Der Hydraulikzylinder 90 ist an diesem rückwärtigen Bereich endseitig mit einem Deckel 94 verschlossen. Bei abgenommenem Deckel 94 ist die Druckkammer des Hydraulikzylinders 90, welche zwischen dem Zylinderboden und dem Kolben gebildet ist, zugänglich.

An das Zylindergehäuse 91 des Hydraulikzylinders 90 ist ein Anschlussbereich 95 angeschlossen, vorzugsweise einteilig angeformt. Der Anschlussbereich 95 weist eine ebene Anschlussfläche 95.1 auf. Diese ebene Anschlussfläche 95.1 umschließt eine Durchtrittsöffnung. Die Durchtrittsöffnung schafft eine räumliche Verbindung zu der Druckkammer des Hydraulikzylinders 90.

Wie die Zeichnungen erkennen lassen, kann auf die Anschlussfläche 95.1 eine Berstplatte 100 aufgesetzt werden.

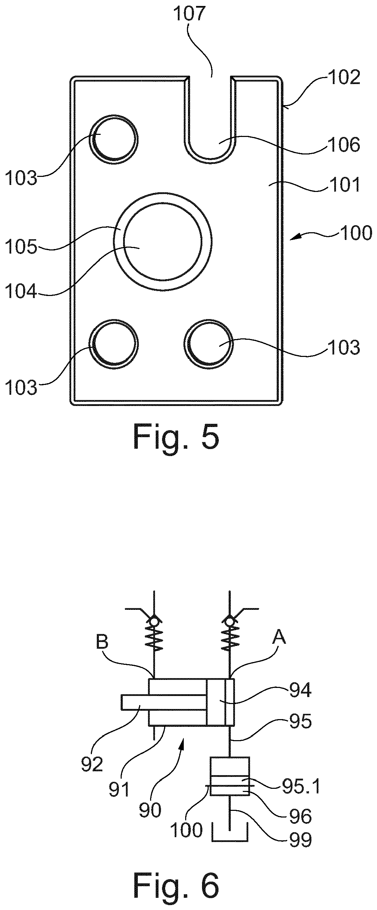

Die Berstplatte 100 ist in Figur 5 näher detailliert. Wie diese Darstellung zeigt, weist die Berstplatte 100 eine ebene Rückseite 101 und eine ebene Vorderseite 102 auf. Mittig besitzt die Berstplatte 101 ein Berststück 104. Das Berststück 104 ist über eine, vorzugsweise umlaufend ausgebildete Sollbruchstelle 105 einteilig mit der Berstplatte 100 verbunden. Die Sollbruchstelle 105 kann beispielsweise in Form einer Nut ausgebildet sein, die in die Vorderseite 102 und/oder in die Rückseite 101 eingebracht ist.

Die Berstplatte 100 weist Bohrungen 103 auf. Im vorliegenden Ausführungsbeispiel sind drei Bohrungen 103 verwendet. Selbstverständlich ist es auch denkbar, dass eine abweichende Anzahl von Bohrungen 103, insbesondere auch nur eine Bohrung 103 verwendet ist.

Die Berstplatte 100 besitzt in einem Bereich eine Ausnehmung 106, die über einen Einführabschnitt 107 zum Randbereich der Berstplatte 100 hin geöffnet ist.

Wie die Figuren 3 und 4 veranschaulichen, kann die Berstplatte 100 zwischen dem Anschlussbereich 95 und einem Berstplatten-Halter 96 verbaut werden.

Der Berstplatten-Halter 96 besitzt an seiner der Berstplatte 100 zugewandten Seite eine Druckfläche 96.2. Mit dieser Druckfläche 96.2 kann der Berstplatten-Halter 96 auf die Rückseite 101 der Berstplatte 100 aufgesetzt werden. An ihrer Vorderseite 102 stützt sich die Berstplatte 100 auf der Anschlussfläche 95.1 des Anschlussbereichs 95 ab. Im montierten Zustand überdeckt die Vorderseite 102 der Berstplatte 100 die Durchführung in der Anschlussfläche 95.1. Dabei ist dann die Berstplatte 100 so positioniert, dass das Berststück 104 über der Durchführung zum Liegen kommt.

Figur 4 veranschaulicht, dass der Berstplatten-Halter 96 eine Durchführung 96.3 aufweist. Im montierten Zustand kommt diese Durchführung 96.3 ebenfalls über dem Berststück 104 zum Liegen. An die Durchführung 96.3 schließt sich ein Kanalabschnitt des Berstplatten-Halters 96 an. Der Kanalabschnitt mündet im Bereich eines Leitungsanschlusses 99.1 des Berstplatten-Halters 96 in eine Hydraulikleitung 99. Die Hydraulikleitung 99 kann so ausgebildet sein, dass sie an ihrem dem Berstplatten-Halter 96 abgewandten Ende ein Klemmstück 99.3 aufweist. Mittels des Klemmstücks 99.3 kann ein Rohranschluss 99.2 gebildet werden, an den eine weitere Hydraulikleitung lösbar angekoppelt werden kann.

Der Berstplatten-Halter 96 besitzt vier Bohrungen, von denen drei Schraubaufnahmen 96.4 für Befestigungsschrauben 97 bilden. Die Bohrungen verlaufenden ausgehend von einer Deckwand 96.1 hin zu der Druckfläche 96.2.

In die Bohrung, welche nicht mit den Befestigungsschrauben 97 belegt ist, ist ein Halteelement 98 eingesetzt.

Das Halteelement 98 ist ebenfalls von einer Schraube gebildet. Das Halteelement 98 ist durch die Bohrung hindurchgesteckt und in eine Gewindeaufnahme des Anschlussbereichs 95 eingeschraubt, wobei sich die Gewindeaufnahme ausgehend von der Anschlussfläche 95.1 in den Anschlussbereich 95 hinein erstreckt.

In gleicher Weise können drei weitere Gewindeaufnahmen in dem Anschlussbereich 95 für die Befestigungsschrauben 97 vorgesehen sein.

Zur Montage der Berstplatte 100 kann diese, wie Figur 3 und 4 veranschaulichen, mit ihrem Einführabschnitt 107 auf das montierte Halteelement 98 im Bereich zwischen dem Berstplatten-Halter 96 und dem Anschlussbereich 95 aufgeschoben werden. Die Bewegung wird mit der Ausnehmung 106 begrenzt, in die sich das Halteelement 98 fügt.

Die Ausnehmung 106 bildet zusammen mit einem Bolzenabschnitt des Halteelements 98 eine Schwenklagerung, um die die Berstplatte 100 geschwenkt und in ihre Montageposition gebracht werden kann. Dann stehen die Bohrungen 103 in Flucht zu den Schraubaufnahmen 96.4.

Nun können die Befestigungsschrauben 97 in die Schraubaufnahmen 96.4 und die Bohrungen 103 der Berstplatte 100 hindurchgeführt und in die Gewindeaufnahmen des Anschlussbereichs 95 eingeschraubt werden. Wenn die Befestigungsschrauben 97 angespannt werden, so wird die Berstplatte 100 bestimmungsgemäß in ihrer Montageposition zwischen dem Anschlussbereich 95 und dem Berstplatten-Halter 96 geklemmt gehalten. Abschließend kann auch das Halteelement 98 weiter in die zugeordnete Gewindeaufnahme eingeschraubt und der Montagevorgang damit abgeschlossen werden.

Wenn nun während des Betriebs eine Überlastsituation auftritt, so bricht das Berststück 104 gegenüber der Berstplatte 100 im Bereich der Sollbruchstelle 105 auf.

Die Hydraulikflüssigkeit in der Druckkammer des Hydraulikzylinders 90 kann sich dann durch die Durchführung des Anschlussbereichs 95 und die von dem Berststück 104 freigegebene Öffnung der Berstplatte 100 hinein in den Kanalabschnitt des Berstplatten-Halters 96 entspannen. Von dort wird die Hydraulikflüssigkeit über die Hydraulikleitung 99 abgeleitet.

Nun ist eine Reparatur der Überlastsicherung erforderlich. In umgekehrter Weise, wie dies oben beim Montagevorgang beschrieben ist, können nun die Befestigungsschrauben 97 gelöst und entfernt werden. Das Halteelement 98 wird nur gelöst, verbleibt aber in der in Figur 4 gezeigten Position, wird also nicht entfernt. Die Berstplatte 100 ist nun freigegeben und kann abgenommen werden. Hierzu lässt sich die Berstplatte 100 einfach von dem Halteelement 98 abziehen, wobei das Halteelement 98 den Bereich der Berstplatte 100 durch den Einführabschnitt 107 verlässt. Erkennbar verbleibt der Berstplatten-Halter 96 im Wesentlichen in seiner Montageposition, da er mit dem Halteelement 98 an dem Anschlussbereich 95 gehalten bleibt. Wie oben beschrieben, kann nun eine neue Berstplatte 100 eingesetzt und verbaut werden. Die Überlastsicherung ist dann wieder zur erneuten Verwendung bereit.

Figur 6 zeigt eine schematische Darstellung der Überlastsicherung. Wie diese Darstellung veranschaulicht, steht die Druckkammer über den Hydraulikanschluss A mit einem Hydrauliksystem in Verbindung. Auf der der Druckkammer gegenüberliegenden Seite des Kolbens ist eine weitere Kammer des Hydraulikzylinders 90 gebildet. Diese weitere Kammer steht über den Hydraulikanschluss B mit dem Hydrauliksystem in Verbindung. Zur Einstellung des Brechspalts S kann das Hydrauliköl zwischen der Druckkammer und der weiteren Kammer über die Hydraulikanschlüsse A, B umgepumpt werden.

## Patentansprüche

1. Überlastsicherung für das hydraulische System einer Mineralmaterial-Bearbeitungsanlage, insbesondere für einen Rotationsprallbrecher, einen Backenbrecher oder dgl.,
wobei ein Hydraulikelement, welches dazu hergerichtet ist Hydraulikflüssigkeit zu bevorraten und/oder zu leiten vorgesehen ist,
wobei das Hydraulikelement einen Anschlussbereich (95) aufweist, der eine Durchtrittsöffnung für Hydraulikfluid des Hydrauliksystems aufweist,
wobei die Durchtrittsöffnung mittels einer auswechselbaren Berstplatte (100) überdeckt ist,
wobei ein Berstplatten-Halter (96) auf der dem Anschlussbereich (95) abgewandten Rückseite (101) der Berstplatte (100) angeordnet ist,
und wobei zumindest eine Befestigungsschraube (97) durch eine Schraubaufnahme (96.4) des Berstplatten-Halters (96) und eine dazu fluchtend angeordnete Bohrung (103) der Berstplatte (100) hindurchgeführt und in eine Gewindeaufnahme des Anschlussbereichs (95) eingeschraubt ist, derart, dass die Berstplatte (100) zwischen einer Druckfläche (96.2) des Berstplatten-Halters (96) und einer Anschlussfläche (95.1) des Anschlussbereichs (95) im Montagezustand geklemmt gehalten ist, **dadurch gekennzeichnet,**
**dass** wenigstens ein Halteelement (98) vorgesehen ist, das in einer Demontageposition den Berstplatten-Halter (96) an dem Hydraulikelement, insbesondere an dem Anschlussbereich (95) hält, wenn die zumindest eine Befestigungsschraube (97) aus der Gewindeaufnahme des Anschlussbereichs (95) herausgeschraubt und die Berstplatte (100) entfernt ist.

2. Überlastsicherung nach Anspruch 1, **dadurch gekennzeichnet, dass** die Berstplatte (100) eine oder mehrere Ausnehmungen (106) aufweist, die einen seitlichen Einführabschnitts (107) aufweist, wobei der Einführabschnitt (107) die Ausnehmung (106) zu einer quer zur Plattenebene der Berstplatte (100) verlaufenden Seite hin öffnet, derart, dass das Halteelement (98) quer zur Plattenebene des Berstelements (100) seitlich in die Ausnehmung (106) einschiebbar und aus dieser herausnehmbar ist.

3. Überlastsicherung nach Anspruch 1 oder 2, **dadurch gekennzeichnet, dass** das Halteelement (98) von einer Schraube gebildet ist, wobei vorzugsweise vorgesehen ist, dass diese Schraube mit einem Bolzenabschnitt in die Ausnehmung (106) eingreift, und dass das Halteelement (98) durch eine Schraubaufnahme (96.4) des Berstplatten-Halters (96) und die Ausnehmung (106) hindurchgeführt und in eine in die Anschlussfläche (95.1) des Anschlussbereichs (95) eingebrachte Gewindeaufnahme eingeschraubt ist.

4. Überlastsicherung nach einem der Ansprüche 1 bis 3, **dadurch gekennzeichnet, dass** die Berstplatte (100) mit ihrer ebenen Vorderseite (102) auf der Anschlussfläche (95.1) des Anschlussbereichs (95) und einer gegenüberliegenden ebenen Rückseite (101) auf der Druckfläche (96.2) des Berstplatten-Halters (96) anliegt und zwischen der Anschlussfläche (95.1) und der Druckfläche (96.2) geklemmt gehalten ist.

5. Überlastsicherung nach einem der Ansprüche 1 bis 4, **dadurch gekennzeichnet, dass** das Halteelement (98) mit einem Abschnitt der Berstplatte (100), insbesondere mit der Ausnehmung (106), ein Schwenklager bildet, dessen Schwenkachse quer zu der Anschlussfläche (95.1) steht, derart dass die Berstplatte (100) dann, wenn die Befestigungsschrauben (97) entfernt sind quer zur Anschlussfläche (95.1) aus ihrer Montageposition herausschwenkbar ist.

6. Überlastsicherung nach einem der Ansprüche 1 bis 5, **dadurch gekennzeichnet, dass** die Berstplatte (100) ein Berststück (104) mit einer Sollbruchstelle (105) auf aufweist, die vorzugsweise in Form einer Querschnittsschwächung ausgebildet ist.

7. Überlastsicherung nach einem der Ansprüche 1 bis 6, **dadurch gekennzeichnet, dass** der Berstplatten-Halter (96) eine Durchführung (96.3) aufweist, die im montierten Zustand des Berstplatten-Halters (96) von der Berstplatte (100) überdeckt ist, dass sich an die Durchführung (96.3) ein Kanalabschnitt des Berstplatten-Halters (96) anschließt und dass der Kanalabschnitt zu einem Leitungsanschluss (99.1) führt, an den eine Hydraulikleitung (99) an den Berstplatten-Halter (96) anschließbar oder angeschlossen ist.

8. Überlastsicherung nach einem der Ansprüche 1 bis 7, **dadurch gekennzeichnet, dass** das Hydraulikelement ein Hydraulikzylinder (90) ist, der ein Zylindergehäuse (91) aufweist, in dem ein Kolben verstellbar geführt ist, wobei an den Kolben eine Kolbenstange (92) angeschlossen ist, die mit ihrem Kolbenstangenkopf (93) aus dem Hydraulikzylinder (90) herausgeführt ist, wobei der Kolben eine Druckkammer begrenzt, und wobei die Druckkammer in räumlicher Verbindung mit der Durchtrittsöffnung des Anschlussbereichs (95) steht.

9. Überlastsicherung nach Anspruch 8, **dadurch gekennzeichnet, dass** der Hydraulikzylinder (90), vorzugsweise mit seiner Kolbenstange (92), an ein Wandelement (44.2) eines Brechaggregats (40), mittels eines Schwenklagers (44.4) angekoppelt ist, und wobei das Wandelement (44.2) mittels eines Lagers (44.1) schwenkbar an einem Chassis (11) gehalten ist, wobei vorzugsweise vorgesehen ist, dass das Wandelement (44.2) Teil einer Prallschwinge (44) eines Rotationsprallbrechers ist.

10. Verfahren zur Reparatur einer Überlastsicherung einer Mineralmaterial-Bearbeitungsanlage, wobei die Überlastsicherung gemäß einem der Ansprüche 1 bis 9 ausgestaltet ist, wobei die Befestigungsschrauben (97) gelöst und entfernt werden, und dabei der Berstplatten-Halter (96) mittels des Halteelements (98) mit dem Anschlussbereich (95) verbunden bleibt, wobei dann die Berstplatte (100) der Überlastsicherung entnommen und eine neue Berstplatte (100) in die Überlastsicherung eingesetzt wird, und dass dann die Befestigungsschrauben (97) wieder in die Schraubaufnahmen (96.4) des Berstplatten-Halters (96) und die Bohrungen (103) der neuen Berstplatte (100) eingesetzt und in die Gewindeaufnahmen des Anschlussbereichs (95) eingeschraubt werden.

## Claims

1. An overload protection device for the hydraulic system of a mineral material machining plant, in particular for a rotary impact crusher, a jaw crusher or the like, wherein a hydraulic element equipped to store and/or convey a hydraulic fluid is provided,
wherein the hydraulic element comprises a connection area (95) having a passage opening for the hydraulic fluid of the hydraulic system,
wherein the passage opening is covered by means of a replaceable burst panel (100),
wherein a burst panel holder (96) is disposed on the rear face (101) of the burst panel (100) facing away from the connection area (95),
and wherein at least one fastening bolt (97) is passed through a bolt mount (96.4) of the burst panel holder (96) and through a bore (103) of the burst panel (100) disposed in alignment therewith and is bolted into a threaded mount of the connection area (95) in such a way that in the assembled state the burst panel (100) is held clamped between a pressure surface (96.2) of the burst panel holder (96) and a connection surface (95.1) of the connection area (95),
**characterized**
**in that** at least one retaining element (98) is provided, which, in a dismantling position, holds the burst panel holder (96) to the hydraulic element, in particular at the connection area (95), when the at least one fastening bolt (97) is unbolted from the threaded mount of the connection area (95) and the burst panel (100) is removed.

2. The overload protection device according to claim 1, **characterized in that** the burst panel (100) comprises one or more recesses (106), which have a lateral insertion section (107), wherein the insertion section (107) opens the recess (106) towards one side extending transversely to the plate plane of the burst panel (100) such that the retaining element (98) can be inserted laterally into the recess (106) transversely to the plate plane of the burst element (100) and removed therefrom.

3. The overload protection device according to claim 1 or 2, **characterized in that** the retaining element (98) is formed by a bolt, wherein provision is preferably made for this bolt to engage with a bolt section in the recess (106), and **in that** the retaining element (98) is passed through a bolt mount (96.4) of the burst panel holder (96) and the recess (106) and is bolted into a threaded mount introduced into the connection surface (95.1) of the connection area (95).

4. The overload protection device according to any of the claims 1 to 3, **characterized in that** the planar front face (102) of the burst panel (100) rests on the connection surface (95.1) of the connection area (95) and **in that** an opposite planar rear face (101) rests on the pressure surface (96.2) of the burst panel holder (96) and that the burst panel (100) is held clamped between the connection surface (95.1) and the pressure surface (96.2).

5. The overload protection device according to any of the claims 1 to 4, **characterized in that** the retaining element (98) forms a swivel bearing with a section of the burst panel (100), in particular with the recess (106), the swivel axis of which swivel bearing is transverse to the connection surface (95.1), in such a way that the burst panel (100) can be swiveled out of its mounting position transversely to the connection surface (95.1) when the fastening bolts (97) are removed.

6. The overload protection device according to any of the claims 1 to 5, **characterized in that** the burst panel (100) has a burst piece (104) having a predetermined breaking point (105), which is preferably in the form of a cross-sectional weakening.

7. The overload protection device according to any of the claims 1 to 6, **characterized in that** the burst panel holder (96) has a lead-through (96.3), which is covered by the burst panel (100) in the mounted state of the burst panel holder (96), **in that** a channel section of the burst panel holder (96) adjoins the lead-through (96.3), and **in that** the channel section leads to a line connection (99.1), which connects or can be used to connect a hydraulic line (99) to the burst panel holder (96).

8. The overload protection device according to any of the claims 1 to 7, **characterized in that** the hydraulic element is a hydraulic cylinder (90), which has a cylinder housing (91), in which a piston is adjustably guided, wherein a piston rod (92) is connected to the piston and the piston rod head (93) of which is guided out of the hydraulic cylinder (90), wherein the piston delimits a pressure chamber, and wherein the pressure chamber is spatially connected to the passage opening of the connection area (95).

9. The overload protection device according to claim 8, **characterized in that** the hydraulic cylinder (90), preferably its piston rod (92), is coupled to a wall element (44.2) of a crusher unit (40) by means of a swivel bearing (44.4), and **in that** the wall element (44.2) is held in a swiveling manner on a chassis (11) by means of a bearing (44.1), wherein preferably provision is made for the wall element (44.2) to be part of an impact rocker (44) of a rotary impact crusher.

10. A method of repairing an overload protection device of a mineral material machining plant, wherein the overload protection device is designed according to any of the claims 1 to 9, wherein the fastening bolts (97) are loosened and removed, and the retaining element (98) keeps the burst panel holder (96) connected to the connection area (95), wherein the burst panel (100) of the overload protection device is then removed and a new burst panel (100) is inserted into the overload protection device, and wherein the fastening bolts (97) are then reinserted into the bolt mounts (96.4) of the burst panel holder (96) and into the bores (103) of the new burst panel (100) and bolted into the threaded mounts of the connection area (95).

## Revendications

1. Dispositif de protection contre les surcharges pour le système hydraulique d'une installation de traitement de matières minérales, en particulier pour un impacteur rotatif, un concasseur à mâchoires ou similaire,
dans lequel un élément hydraulique est prévu, lequel est adapté pour stocker et/ou diriger du fluide hydraulique,
dans lequel l'élément hydraulique présente une zone de raccordement (95) qui présente une ouverture de passage pour le fluide hydraulique du système hydraulique,
l'ouverture de passage étant recouverte par une plaque de rupture (100) interchangeable,
un support de plaque de rupture (96) étant disposé sur la face arrière (101) de la plaque de rupture (100) opposée à la zone de raccordement (95),
et au moins une vis de fixation (97) étant passée à travers un logement fileté (96.4) du support de plaque de rupture (96) et un alésage fileté (103) de la plaque de rupture (100) disposé en alignement avec celui-ci et étant vissée dans un logement fileté de la zone de raccordement (95), de telle sorte que la plaque de rupture (100) est maintenue serrée entre une surface de pression (96.2) du support de plaque de rupture (96) et une surface de raccordement (95.1) de la zone de raccordement (95) à l'état monté,
**caractérisé**
**en ce qu'**il est prévu au moins un élément de maintien (98) qui, dans une position de démontage, maintient le support de plaque de rupture (96) sur l'élément hydraulique, en particulier sur la zone de raccordement (95), lorsque l'au moins une vis de fixation (97) est dévissée du logement fileté de la zone de raccordement (95) et que la plaque de rupture (100) est retirée.

2. Dispositif de protection contre les surcharges selon la revendication 1, **caractérisé en ce que** la plaque de rupture (100) comporte un ou plusieurs évidements (106) qui présentent une section d'insertion latérale (107), la section d'insertion (107) ouvrant l'évidement (106) vers un côté s'étendant transversalement au plan de la plaque de rupture (100), de telle sorte que l'élément de maintien (98) peut être inséré latéralement dans l'évidement (106) transversalement au plan de la plaque de l'élément de rupture (100) et peut être retiré de celui-ci.

3. Dispositif de protection contre les surcharges selon la revendication 1 ou 2, **caractérisé en ce que** l'élément de maintien (98) est formé par une vis, de préférence il est prévu que cette vis s'engage dans l'évidement (106) par un tronçon de boulon, et **en ce que** l'élément de maintien (98) est guidé à travers un logement fileté (96.4) du support de plaque de rupture (96) et l'évidement (106) et est vissé dans un logement fileté ménagé dans la surface de raccordement (95.1) de la zone de raccordement (95).

4. Dispositif de protection contre les surcharges selon l'une des revendications 1 à 3, **caractérisé en ce que** la plaque de rupture (100) s'applique par sa face avant (102) plane sur la surface de raccordement (95.1) de la zone de raccordement (95) et par une face arrière (101) plane opposée sur la surface de pression (96.2) du support de plaque de rupture (96) et est maintenue serrée entre la surface de raccordement (95.1) et la surface de pression (96.2).

5. Dispositif de protection contre les surcharges selon l'une des revendications 1 à 4, **caractérisé en ce que** l'élément de maintien (98) forme avec une section de la plaque de rupture (100), en particulier avec l'évidement (106), un palier de pivotement dont l'axe de pivotement est transversal à la surface de raccordement (95.1), de telle sorte que la plaque de rupture (100) peut pivoter hors de sa position de montage transversalement à la surface de raccordement (95.1) lorsque les vis de fixation (97) sont retirées.

6. Dispositif de protection contre les surcharges selon l'une des revendications 1 à 5, **caractérisé en ce que** la plaque de rupture (100) présente une pièce de rupture (104) avec un point destiné à la rupture (105), qui est de préférence réalisé sous la forme d'un affaiblissement de la section transversale.

7. Dispositif de protection contre les surcharges selon l'une des revendications 1 à 6, **caractérisé en ce que** le support de plaque de rupture (96) présente un passage (96.3) qui est recouvert par la plaque de rupture (100) lorsque le support de plaque de rupture (96) est monté, **en ce qu'**un tronçon de canal du support de plaque de rupture (96) se raccorde au passage (96.3) et **en ce que** le tronçon de canal mène à un raccord de conduite (99.1) auquel une conduite hydraulique (99) peut être raccordée ou est raccordée au support de plaque de rupture (96).

8. Dispositif de protection contre les surcharges selon l'une des revendications 1 à 7, **caractérisé en ce que** l'élément hydraulique est un vérin hydraulique (90) qui présente un corps de vérin (91) dans lequel un piston est guidé de manière réglable, une tige de piston (92) étant raccordée au piston et sortant du vérin hydraulique (90) par sa tête de tige de piston (93), le piston délimitant une chambre de pression, et la chambre de pression étant en liaison spatiale avec l'ouverture de passage de la zone de raccordement (95).

9. Dispositif de protection contre les surcharges selon la revendication 8, **caractérisé en ce que** le vérin hydraulique (90), de préférence avec sa tige de piston (92), est fixé à un élément de paroi (44.2) d'un groupe de concassage (40), au moyen d'un palier de pivotement (44.4), et l'élément de paroi (44.2) étant maintenu de manière pivotante sur un châssis (11) au moyen d'un palier (44.1), et il est de préférence prévu que l'élément de paroi (44.2) fasse partie d'un bras oscillant à impact (44) d'un impacteur rotatif.

10. Procédé de réparation d'un dispositif de protection contre les surcharges d'une installation de traitement de matières minérales, le dispositif de protection contre les surcharges étant conçu selon l'une des revendications 1 à 9, dans lequel les vis de fixation (97) sont desserrées et enlevées, le support de plaque de rupture (96) restant relié à la zone de raccordement (95) au moyen de l'élément de maintien (98), la plaque de rupture (100) du dispositif de protection contre les surcharges étant ensuite retirée et une nouvelle plaque de rupture (100) étant insérée dans le dispositif de protection contre les surcharges, et dans lequel les vis de fixation (97) sont ensuite replacées dans les logements de vis (96.4) du support de plaque de rupture (96) et les alésages (103) de la nouvelle plaque de rupture (100), puis les visser dans les logements filetés de la zone de raccordement (95).
